# EUROPÄISCHE PATENTSCHRIFT

(11) **EP 0 982 243 B1**
(45) Veröffentlichungstag und Bekanntmachung des Hinweises auf die Patenterteilung: **26.11.2003**
(21) Anmeldenummer: 99116383.3
(22) Anmeldetag: 20.08.1999
(51) Int. Cl.: B65G 17/08

(54) **Kurvenförmiger Gebindetransporteur**
Curved conveyor for packages
Transporteur en courbe pour emballages

(30) Priorität: 22.08.1998 DE 29815087 U
(43) Veröffentlichungstag der Anmeldung: 01.03.2000
(73) Patentinhaber: Krones AG, D-93063 Neutraubling (DE)
(72) Erfinder: Ternes, Klaus, 93053 Regensburg (DE)

(56) Entgegenhaltungen:
- EP-A- 0 829 434
- WO-A-92/11191
- DE-U- 29 815 087
- FR-A- 2 444 629
- US-A- 1 845 297
- US-A- 3 581 873
- US-A- 5 224 587

## Beschreibung

Die Erfindung betrifft einen kurvenförmigen Gebindetransporteur mit einer kurvengängigen Scharnierbandkette aus magnetischem oder magnetisierbarem Material und/oder Gelenkbolzen aus solchem Material, gemäß Oberbegriff von Anspruch 1. Derartige Scharnierbandketten werden in Ganzmetallausführung oder als Kunststoffketten mit metallischen Gelenkbolzen hergestellt und sind daher für Kurvenführungen mit integrierten Haltemagneten geeignet, die das Obertrum der Scharnierbandkette in der Kurvenführung halten.

Derartige Kurvenführungen sind aus dem deutschen Gebrauchsmuster 92 05 107.3 oder auch der europäischen Offenlegungsschrift 0 790 197 bekannt. Zur gegenläufigen Rückführung des Untertrums der endlosen Scharnierbandkette sind die genannten Kurvenführungen an ihrer Unterseite mit eingefrästen Führungsschlitzen ausgestattet. Diese Lösung erfordert einen verhältnismäßig massiven Ausgangskörper aus dem mit hohem Zeit- und Kostenaufwand die endgültige Kontur bei gleichzeitig erheblichem Materialverlust gefräst wird. Ferner sind die Führungsschlitze nicht für alle Kettentypen gleichermaßen geeignet.

Ein Gebindetransporteur gemäß dem Oberbegriff von Anspruch 1 ist aus der FR-A-2 444 629 bekannt.

Der Erfindung liegt die Aufgabe zugrunde, eine einfachere Lösung anzugeben.

Gelöst wird die Aufgabe mit den Merkmalen des Patentanspruchs 1.

Das Traggerüst besteht aus gekrümmten, äquidistant gegenüberliegenden Wangen, die durch mehrere Quertraversen und Distanzstangen verbunden sind und von Standbeinen getragen werden. Auf der Oberseite der regelmäßig beabstandeten Quertraversen ruht der Kurvenführungskörper, während die Leisten an deren Unterseite befestigt sind und zwischen sich die Scharniergelenke des Untertrums mit Spiel seitlich führen. Gestützt wird das Untertrum von den genannten Gleitleisten, die mittels Clipsen auf den mit Abstand unter den Quertraversen in einer Parallelebene angeordneten Distanzstangen formschlüssig befestigt sind.

Eine Ausführung gemäß Anspruch 3 hat den Vorteil, dass die Oberfläche der Scharnierbandkette bei der Rückführung des Untertrums durch die Gleitleisten im wesentlichen vollflächig von Schmutz, Glassplittern oder dgl. befreit wird.

Weitere vorteilhafte Ausgestaltungen der Erfindung sind Gegenstand der Unteransprüche.

Nachfolgend wird ein bevorzugtes Ausführungsbeispiel anhand der Fig. erläutert. Es zeigt:
- Fig. 1: eine Draufsicht auf einen Gebindetransporteur
- Fig. 2: einen Vertikalschnitt des Gebindetransporteurs entlang der Linie A-A in Fig. 1 und
- Fig. 3: einen teilweisen Längsschnitt des Gebindetransporteurs entlang der Linie B-B in Fig. 1.

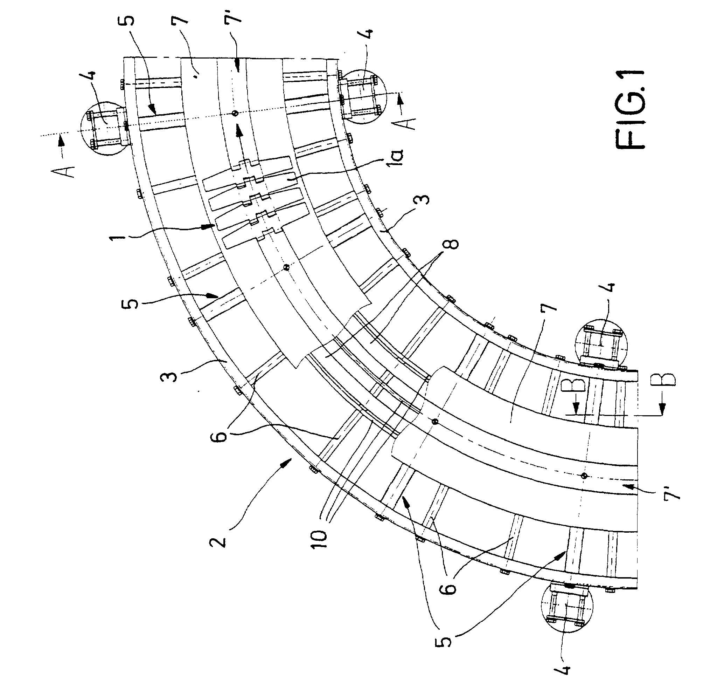

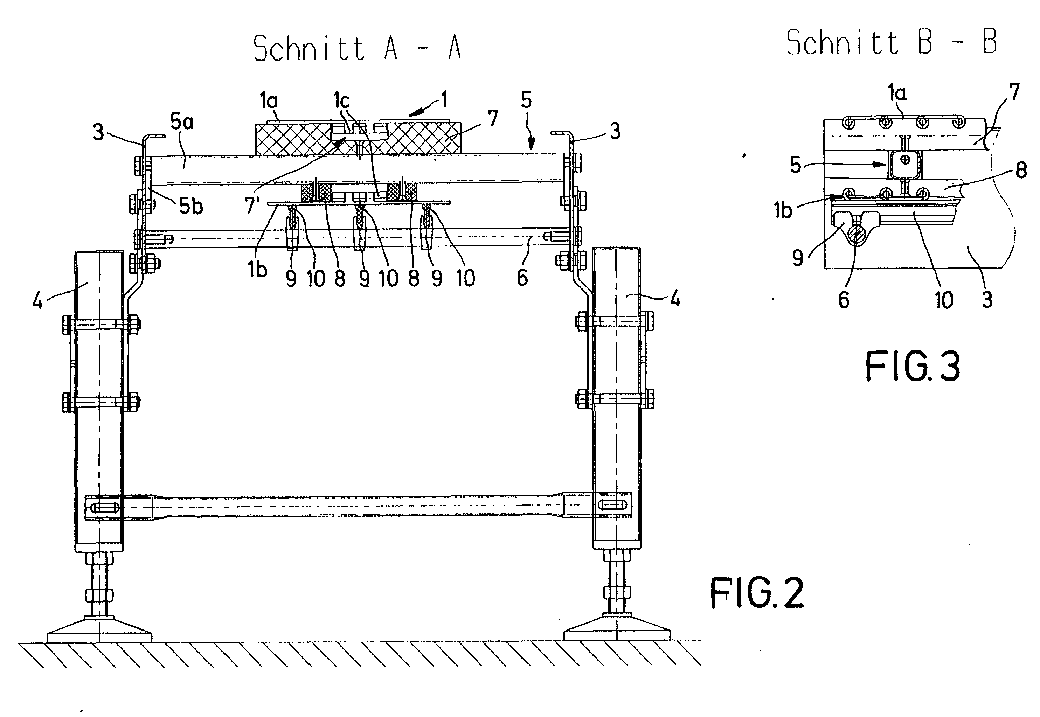

Wegen der besseren Übersicht ist in der Fig. 1 von der Scharnierbandkette 1 des Gebindetransporteurs nur ein Teil des Obertrums 1a dargestellt. Das Traggestell 2 besteht aus zwei gegenüberliegenden kreisbogenförmigen Wangen 3, die an ihren voneinander wegweisenden Außenseiten von angeschraubten Standbeinen 4 getragen werden. Zwischen den zueinander weisenden Innenflächen der Wangen 3 befinden sich mehrere in einer Ebene liegende, gegenseitig beabstandete Quertraversen 5 aus Vierkantrohren 5a mit an den Enden angeschweißten Flanschplatten 5b. Diese Flanschplatten liegen flächig an den Wangen 3 an und sind mit diesen verschraubt. In einer mit Abstand parallel unter den Quertraversen 5 liegenden Ebene befinden sich mehrere in kürzeren Abständen angeordnete Distanzstangen 6, die an ihren Enden eine Sacklochgewindebohrung aufweisen, in die die Wangen 3 durchgreifende Schrauben eingeschraubt sind (siehe Fig. 2).

Sowohl die Quertraversen 5 als auch die Distanzstangen 6 können ebenso für geradelaufende Gebindetransporteure verwendet werden, so dass diese Elemente in hohen Losgrößen mit geringen Kosten herstellbar sind.

Mittig auf der Oberseite der Quertraversen 5 ist ein einteiliger Kurvenführungskörper 7 aus hochverschleißfestem Kunststoff mittels Senkkopfschrauben befestigt. Die Oberseite des Kurvenführungskörpers 7 ist mit einer eingeformten Nut 7' für die Scharniergelenke 1c der Scharnierbandkette 1 versehen. Die lichte Weite dieser Nut ist etwas breiter bemessen als die Breite der Scharniergelenke. Unterhalb der Nut 7' sind entlang deren Längserstreckung hintereinander versetzt mehrere Vertiefungen mit eingesetzten Haltemagneten (nicht dargestellt) für die Scharnierbandkette vorhanden.

An der Unterseite der Quertraversen 5 sind zwei gekrümmte Leisten 8 aus Kunststoff so einander gegenüberliegend angeschraubt, dass der lichte Abstand der zueinander weisenden Leistenflächen ebenfalls geringfügig größer als die Scharniergelenkbreite ist und die dadurch gebildete Seitenführung der Scharniergelenke 1c im wesentlichen unter der Nut 7' des Kurvenführungskörpers 7 fluchtend verläuft.

Im Bereich unter dem Leistenpaar 8 sind auf den Distanzstangen 6 Clipse 9 aufgeschnappt. Diese Clipse halten Gleitleisten 10, die einen profilierten Querschnitt aufweisen und von komplementär geformten Schlitzen in den Clipsen 9 formschlüssig gehalten werden. Die Gleitleisten 10 bilden eine Stützebene für die im Untertrum 1b nach unten weisende Tragfläche der Scharnierbandkette.

Der Abstand zwischen der Unterseite der Führungsleisten 8 und der Oberseite der Gleitleisten 10 ist größer bemessen als die Dicke der Scharnierbandtragplatten, so dass diese ohne Verklemmungen im vorhandenen Spalt gleiten können.

Gebindetransporteure der beschriebenen Art können sehr kostengünstig hergestellt werden und sind zum Transport von Gegenständen wie z.B. Kartons, Flaschenkästen, Trays oder dgl. in Verbindung mit verschiedenen Kettentypen verwendbar.

## Patentansprüche

1. Kurvenförmiger Gebindetransporteur mit einer kurvengängigen Scharnierbandkette (1) aus magnetischem oder magnetisierbarem Material und/oder Scharniergelenkbolzen aus solchem Material, mit einem Haltemagnete aufweisenden Kurvenführungskörper (7) zum Aufnehmen und seitlichen Führen des Obertrums (1a) der Scharnierbandkette, mit in Förderrichtung beabstandeten Quertraversen (5), die auf ihrer Oberseite den Kurvenführungskörper (7) tragen und mit ihren Enden an zwei gekrümmten, zueinander äquidistant angeordneten Wangen (3) befestigt sind, die von Standbeinen (4) getragen werden, mit einem an der Unterseite der Quertraversen (5) befestigten Führungsleistenpaar, das aus gekrümmten, zueinander äquidistant angeordneten Leisten (8) besteht, deren lichter Innenabstand zumindest geringfügig größer ist als die Breite der Scharniergelenke (1c) der Scharnierbandkette (1), **gekennzeichnet durch** mit Abstand parallel unter den Quertraversen (5) in Förderrichtung beabstandeten Distanzstangen (6), deren Enden an den Wangen (3) befestigt sind, und mit auf den Distanzstangen (6) angeordneten Stützmitteln, insbesondere in Förderrichtung verlaufende, von Clipsen (9) gehaltene Gleitleisten (10), auf denen die Tragfläche des Untertrums (1b) der Scharnierbandkette (1) abgestützt gleitet, während die Scharniergelenke (1c) des Untertrums (1b) zwischen den gegenüberliegenden Leisten (8) seitlich geführt sind.

2. Transporteur nach Anspruch 1, **dadurch gekennzeichnet, dass** auf den Distanzstangen (6) mehrere Clipse (9) versetzt angeordnet sind, wenigstens zwei pro Distanzstange.

3. Transporteur nach Anspruch 1 oder 2, **dadurch gekennzeichnet, dass** die Clipse (9) benachbarter Distanzstangen (6) seitlich so versetzt angeordnet sind, dass die Gleitleisten (10) sinuslinienartig verlaufend gehalten werden.

4. Transporteur nach wenigstens einem der Ansprüche 1 bis 3, **dadurch gekennzeichnet, dass** die Clipse (9) die Distanzstangen (6) formschlüssig umfassend ausgeführt sind.

5. Transporteur nach wenigstens einem der vorhergehenden Ansprüche 1 bis 4, **dadurch gekennzeichnet, dass** die Gleitleisten (10) einen profilierten Querschnitt aufweisen und die Clipse (9) zur formschlüssigen Aufnahme der Gleitleisten einen komplementär geformten Schlitz besitzen.

6. Transporteur nach wenigstens einem der vorhergehenden Ansprüche 1 bis 5, **dadurch gekennzeichnet, dass** der Kurvenführungskörper (7) einstückig mit einer vertieft eingeformten Nut (7') zur Aufnahme der Scharniergelenke (1c) des Obertrums (1a) ausgeführt ist, insbesondere aus einem hochverschleißfesten Kunststoff.

7. Transporteur nach Anspruch 6, **dadurch gekennzeichnet, dass** an der Unterseite des Kurvenführungskörpers (7) im Bereich entlang der Nut (7') Vertiefungen zur Aufnahme der Haltemagnete eingeformt sind.

## Claims

1. Curved conveyor for packages with a curving flat-top chain (1) made of magnetic or magnetisable material and/or hinge link pins from such material, with a curved guide (7) which has holding magnets to pick up the top end (1a) of the flat-top chain and guide laterally, with crossbeams (5) at intervals in the conveying direction, which carry the curved guides (7) on the top and are fastened at the ends to two bent side plates (3) arranged equidistant to each other, which are supported by legs (4), with a pair of guide rails fastened to the bottom of the crossbeams (5), which consist of bent rails (8) arranged equidistant to each other, the overall internal distance of which is at least slightly bigger than the width of the hinge (1c) of the flat-top chain (1 ), **characterised by** distances rods (6) at intervals parallel under the crossbeams (5) in the conveying direction, the ends of which are fastened to the side plates (3) and with supports arranged on the distance rods (6); particularly slide rails (10) running in the conveying direction held by clips (9), on which the bearing surface of the bottom end (1b) of the flat-top chain (1) slides and is supported, whilst the hinge (1c) at the bottom end (1b) is guided laterally between the rails which are opposite each other (8).

2. Conveyor according to claim 1, **characterised by** the fact that several clips (9) are arranged offset on the distance rods (6), at least two per distance rod.

3. Conveyor according to claim 1 or 2, **characterised by** the fact that the clips (9) of neighbouring distance rods (6) are arranged offset at the side so that the guide rails (10) can be kept running in a sinus type shape.

4. Conveyor according to at least one of claims 1 to 3, **characterised by** the fact that the clips (9) are made to enclose the distance rods (6).

5. Conveyor according to at least one of the previous claims 1 to 4, **characterised by** the fact that the slide rails (10) have a profiled cross section and the clips (9) have a slit shaped appropriately to enclose it to pick up of the slide rails.

6. Conveyor according to at least one of the previous claims 1 to 5, **characterised by** the fact that the curved guides (7) are made in one piece with a deep moulded groove (7) to pick up the hinge (1c) of the top end (1a), particularly made of a wear resistant plastic.

7. Conveyor according to claim 6, **characterised by** the fact that depressions are moulded on the bottom of the curved guide (7) in the area along the groove (7) to pick up the holding magnets.

## Revendications

1. Transporteur d'emballages en fût métallique en forme de courbe avec une chaîne plate à charnières (1) se déplaçant sur une courbe et composée de matériau magnétique ou pouvant être magnétisé et/ou d'un axe d'articulation à charnières de même matériau, avec un corps directeur de courbes (7) présentant des électroaimants de maintien pour prendre et guider latéralement le brin supérieur (1a) de la chaîne plate à charnières, avec des traverses latérales (5) dans la direction d'extraction, supportant, sur leur face supérieure, le corps directeur de courbes (7) et fixées par leurs extrémités à deux limons (3) cintrés équidistants l'un de l'autre et supportés par des jambes de soutien (4), avec un couple de barres conductrices fixé sur la face inférieure des traverses latérales (5) et composé de barres (8) cintrées placées à égale distance l'une de l'autre, la distance interne étant au moins légèrement supérieure à la largeur des articulations à charnières (1c) de la chaîne plate à charnières (1),
**caractérisée par**
des jambes de force (6) parallèles, dans la direction d'extraction sous les traverses latérales (5) et dont les extrémités sont fixées aux limons (3) et avec des moyens de support placés sur les jambes de force (6), en particulier des barres de glissement (10) maintenues par des agrafes (9) et allant dans la direction d'extraction, sur lesquelles la surface d'appui du brin inférieur (1b) de la chaîne plate à charnières (1) glisse jusqu'à une butée, alors que les articulations à charnières (1c) du brin inférieur (1b) sont guidées latéralement entre les barres (8) opposées.

2. Transporteur selon la revendication 1,
**caractérisé en ce que**
plusieurs agrafes (9) sont placées de manière décalée sur les jambes de force (6), au moins deux par jambe de force.

3. Transporteur selon la revendication 1 ou 2,
**caractérisé en ce que**
les agrafes (9) des jambes de force (6) voisines sont placées de manière décalée sur les côtés, de telle sorte que les barres de glissement (10) sont maintenues et suivent une ligne sinusoïdale.

4. Transporteur selon au moins l'une quelconque des revendications 1 à 3,
**caractérisé en ce que**
les agrafes (9) des jambes de force (6) sont intégralement fabriquées de manière mécanique.

5. Transporteur selon au moins l'une quelconque des revendications précédentes 1 à 4,
**caractérisé en ce que**
les barres de glissement (10) présentent une coupe transversale profilée et **en ce que** les agrafes (9) possèdent une encoche formée en plus pour proposer un logement mécanique aux barres de glissement.

6. Transporteur selon au moins l'une quelconque des revendications précédentes 1 à 5,
**caractérisé en ce que**
le corps directeur de courbes (7) est fabriqué en une seule pièce avec une rainure creusée (7') pour proposer un logement aux articulations à charnières (1c) du brin supérieur (1a) et est particulièrement composé d'une matière artificielle très résistante à l'usure.

7. Transporteur selon la revendication 6,
**caractérisé en ce que**
sur la face inférieure du corps directeur de courbes (7), des encoches ont été creusées dans la zone longitudinale de la rainure (7') pour réaliser un logement aux électroaimants de maintien.
